# EUROPEAN PATENT APPLICATION

(11) **EP 2 270 739 A1**
(43) Date of publication of application: **05.01.2011**
(21) Application number: 09164368.4
(22) Date of filing: 02.07.2009
(51) Int. Cl.: G06Q 30/00

(54) **Online trading method and system with mechanism for verifying authenticity of a product**

(71) Applicant: Userstar Information System Co., Ltd., Chiayi City (TW)
(72) Inventor: Tseng, Yin-Hung, Chiayi City (TW)
(74) Representative: Altenburg, Udo

(57) **Abstract**

An online trading method includes: configuring a marketplace server (1) to receive a product verification request from a first user terminal (3) and to send an authentication request to a second user terminal (4); configuring the second user terminal (4) to receive the authentication request and to send a code request to a transponder (6) that is associated with a product; configuring the transponder (6) to receive the code request and to send a response signal that includes a unique identification (UID) code of the transponder (6), the second user terminal (4) sending out the UID code of the transponder (6); and configuring an authentication center (2) to receive the UID code of the transponder (6), to generate a verification result based on the UID code of the transponder (6), and to send out the verification result for notifying the first party accordingly. An online trading system for implementing the online trading method is also disclosed.

## Description

This invention relates to an online trading method and system, more particularly to an online trading method and system that has a mechanism for verifying authenticity of a product being offered for trade.

A conventional online trading method provides online trading services, such as online auctioning. However, the conventional online trading method does not provide a user-initiated mechanism for verifying authenticity of a product being offered for trade.

Therefore, an object of the present invention is to provide an online trading method that has a mechanism for verifying authenticity of a product being offered for trade.

Another object of the present invention is to provide an online trading system for implementing the online trading method.

According to an aspect of the present invention, an online trading method comprises: configuring a marketplace server to receive a product verification request from a first user terminal of a first party to verify authenticity of a product being offered for trade by a second party, and to send an authentication request to a second user terminal of the second party in response to the product verification request; configuring the second user terminal to receive the authentication request from the marketplace server and to send a code request to a transponder that is associated with the product, wherein the second user terminal is equipped with a reader for sending the code request wirelessly to the transponder; configuring the transponder to receive the code request from the reader and to send a response signal wirelessly to the reader, the response signal including a unique identification (UID) code of the transponder; configuring the second user terminal to receive the response signal from the transponder via the reader; and configuring an authentication center to receive the UID code of the transponder from the second user terminal or from the second user terminal via the marketplace server, to generate a verification result based on the UID code received thereby, and to send the verification result to one of the first user terminal and the marketplace server for notifying the first party of the verification result.

According to another aspect of the present invention, an online trading system comprises a marketplace server, a transponder, a second user terminal, and an authentication center. The marketplace server is configured to receive a product verification request from a first user terminal of a first party to verify authenticity of a product being offered for trade by a second party, and to send an authentication request in response to the product verification request. The transponder is associated with the product and has a unique identification (UID) code. The second user terminal is configured to receive the authentication request from the marketplace server and to send a code request to the transponder. The second user terminal is equipped with a reader for sending the code request wirelessly to the transponder. The transponder is configured to receive the code request from the reader and to send a response signal wirelessly to the reader. The response signal includes the UID code. The second user terminal is configured to receive the response signal from the transponder via the reader. The authentication center is configured to receive the UID code of the transponder from the second user terminal or from the second user terminal via the marketplace server, to generate a verification result based on the UID code received thereby, and to send the verification result to one of the first user terminal and the marketplace server for notifying the first party of the verification result.

Other features and advantages of the present invention will become apparent in the following detailed description of the preferred embodiment with reference to the accompanying drawings, of which:
Figure 1 is a schematic block diagram of the preferred embodiment of an online trading system according to this invention connected to the Internet;
Figure 2 is a flow chart of the preferred embodiment of an online trading method to be implemented by the online trading system shown in Figure 1 according to this invention; and
Figures 3 to 5 are schematic diagrams illustrating sample screens shown on user terminals during progress of the online trading method of the preferred embodiment.

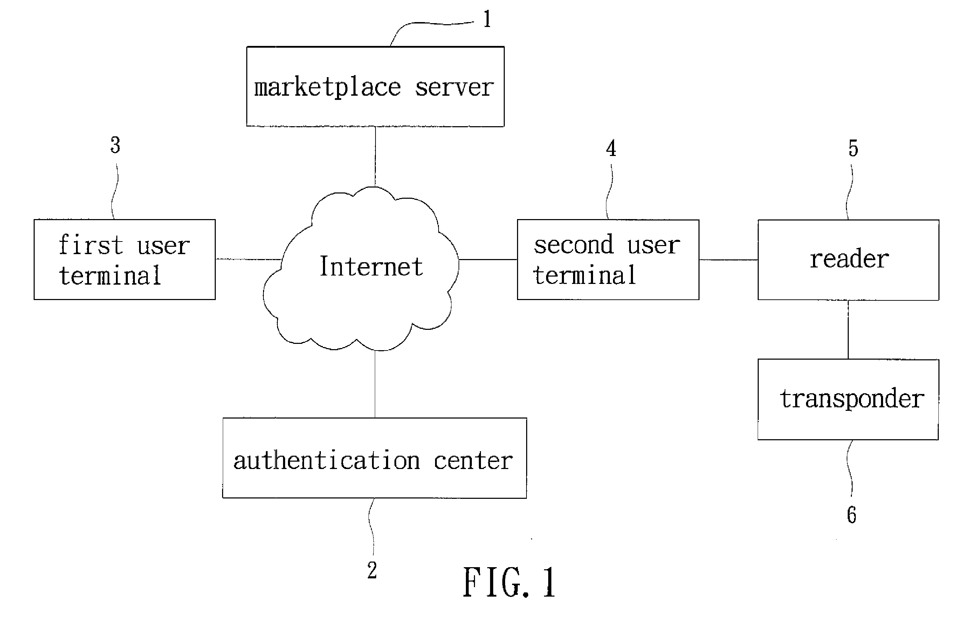

Referring to Figure 1, the preferred embodiment of an online trading system according to this invention is shown to include a marketplace server 1, a transponder 6, a user terminal 4, and an authentication center 2.

The marketplace server 1 provides online trading services in a manner well known in the art, is configured to receive a product verification request from a first user terminal 3 of a first party (not shown) to verify authenticity of a product (not shown) being offered for trade by a second party (not shown), and to send an authentication request in response to the product verification request.

The user terminal 4, hereinafter referred to as the second user terminal, is configured to receive the authentication request from the marketplace server 1 and to send a code request to the transponder 6. In this embodiment, the second user terminal 4 is equipped with a reader 5 for sending the code request wirelessly to the transponder 6.

It is noted that each of the marketplace server 1, the first and second user terminals 3, 4, and the authentication center 2 is connected to the Internet through one of an asymmetric digital subscriber line (ADSL) based network, a Wi-Fi based network, a general packet radio service (GPRS) based network, and a 3G/3. 5G based network.

Furthermore, each of the first and second user terminals 3, 4 may be a personal computer, a mobile phone, or any other user terminal that can access the online trading services provided by the marketplace server 1.

The transponder 6 is associated with the product, has a unique identification (UID) Code, and is configured to receive the code request from the reader 5, and to send a response signal, which includes the UID code thereof, wirelessly to the reader 5. In this embodiment, the transponder 6 is a radio frequency ID (RFID) tag.

The second user terminal 4 is further configured to receive the response signal from the transponder 6 via the reader 5 and to send the UID code of the transponder 6 in the response signal to the marketplace server 1.

The marketplace server 1 is further configured to receive the UID code of the transponder 6 from the second user terminal 4 and to send the UID code of the transponder received thereby to the authentication center 2.

The authentication center 2 is configured to receive the UID code of the transponder 6 from the marketplace server 1, to generate a verification result based on the UID code of the transponder 6 received thereby, and to send the verification result to the marketplace server 1, whereby the first party is notified of the verification result through the marketplace server 1. In this embodiment, the authentication center 2 is a third party authentication center, i.e., an independent authentication center.

In an alternative embodiment, the second user terminal 4, instead of being configured to send the UID code of the transponder 6 received thereby to the marketplace server 1, is configured to send the UID code of the transponder 6 received thereby directly to the authentication center 2.

In yet another embodiment, the authentication center 2, instead of being configured to send the verification result generated thereby to the marketplace server 1, is configured to send the verification result generated thereby directly to the first user terminal 3. In this case, the contact information of the first user terminal 3, together with the UID code of the transponder 6, is provided to the authentication center 2

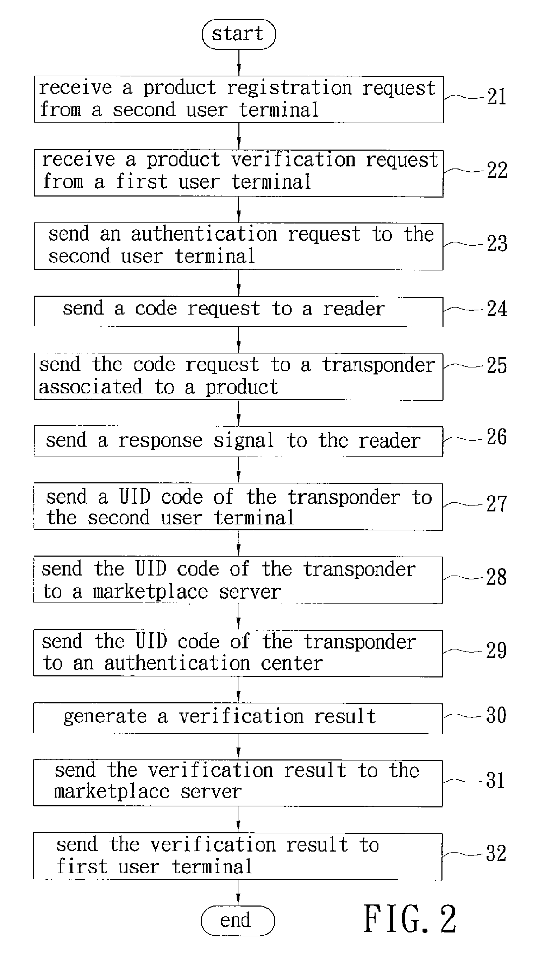

The preferred embodiment of an online trading method to be implemented by the aforementioned online trading system according to this invention will now be described with further reference to Figure 2.

In step 21, the marketplace server 1 receives a product registration request, which includes information relevant to the product, from the second user terminal 4, and provides a webpage for the product based on the information relevant to the product.

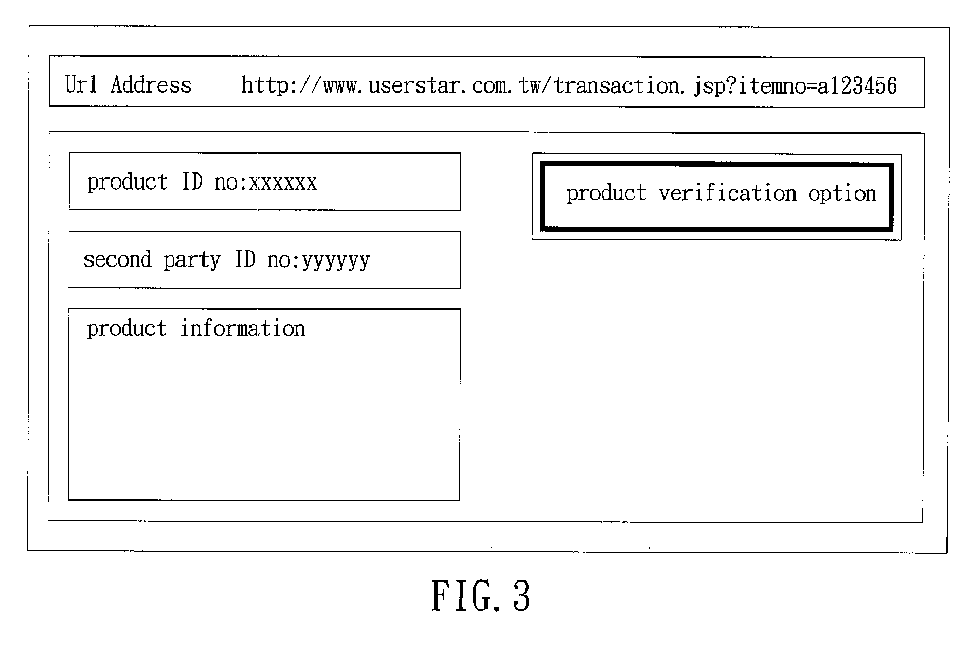

In this step, as illustrated in Figure 3, the webpage provided by the marketplace server 1 is browsable by the first party through the Internet using the first user terminal 3, and contains an ID number of the product, an ID number of the second party, the information relevant to the product, and a product verification option. In this embodiment, the product verification option is in the form of a virtual button, and is available for selection by the first party using the first user terminal 3 so as to generate a product verification request to be received by the marketplace server 1.

It is noted that the product verification request includes the ID number of the product, the ID number of the second party, and the information relevant to the product.

In step 22, the marketplace server 1 receives the product verification request from the first user terminal 3.

In step 23, in response to the product verification request, the marketplace server 1 finds an address, e. g. , an internet protocol (IP) address, of the second user terminal 4 in a database (not shown) thereof that corresponds to the ID number of the second party in the product verification request, establishes a connection with the second user terminal 4 using the address found thereby, provides a webpage, and sends the authentication request to the second user terminal 4.

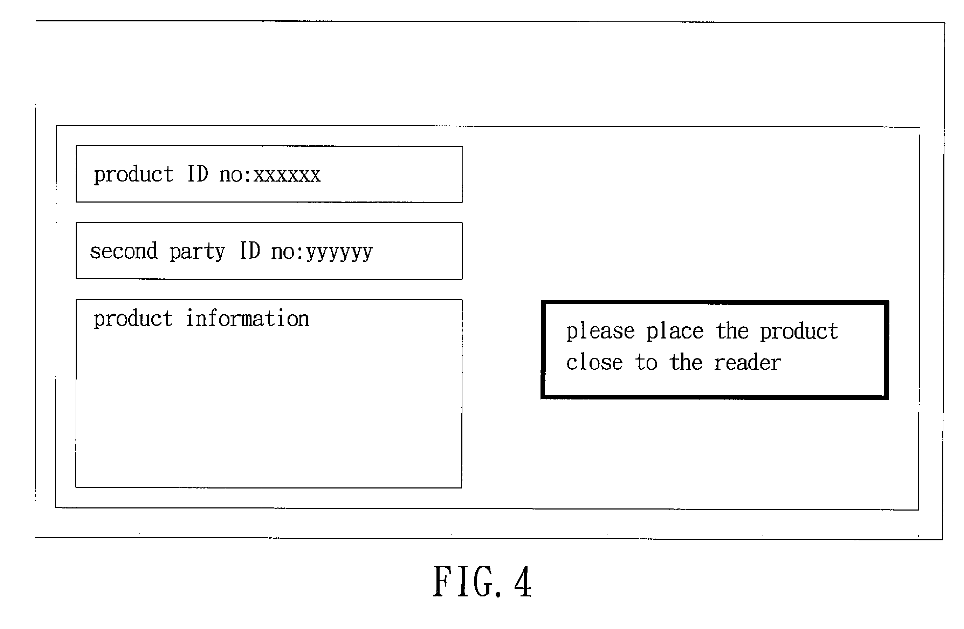

As illustrated in Figure 4, the webpage provided by the marketplace server 1 in this step is browsable by the second party through the Internet using the second user terminal 4, and contains the ID number of the product, the ID number of the second party, the information relevant to the product, and a message that instructs the second party to place the product close to the reader 5.

It is noted that when the IP address of the second user terminal 4 is a dynamic IP address, the marketplace server 1 is configured to receive a new IP address of the second user terminal 4 and to update the old IP address of the second user terminal 4 in the database thereof using the new IP address of the second user terminal 4 received thereby.

In step 24, the second user terminal 4 receives the authentication request from the marketplace server 1 and sends a code request to the reader 5.

In step 25, the reader 5 receives the code request and sends the code request received thereby wirelessly to the transponder 6.

In step 26, the transponder 6 receives the code request from the reader 5 and sends a response signal wirelessly to the reader 5.

It is noted that the response signal includes the UID code of the transponder 6.

In step 27, the reader 5 receives the response signal and sends a UID code of the transponder 6 in the response signal received thereby to the second user terminal 4.

In step 28, the second user terminal 4 receives the UID code of the transponder 6 from the reader 5 and sends the UID code of the transponder 6 received thereby to the marketplace server 1.

In step 29, the marketplace server 1 receives the UID code of the transponder 6 from the second user terminal 4 and sends the UID code of the transponder 6 received thereby to the authentication center 2.

In step 30, the authentication center 2 receives the UID code of the transponder 6 from the marketplace server 1 and generates a verification result based on the UID code of the transponder 6 received thereby.

In this step, the authentication center 2 finds a code in a database thereof that corresponds to the UID code of the transponder 6 received thereby.

It is noted that when the corresponding code is found, the verification result indicates that the product is genuine. Otherwise, i.e., a corresponding code is not found, the verification result indicates that the product is counterfeit.

In step 31, the authentication center 2 sends the verification result to the marketplace server 1.

In step 32, the marketplace server 1 receives the verification result from the authentication center 2, provides a webpage, and sends the verification result received thereby to the first user terminal 3, whereby the first party is notified of the verification result accordingly.

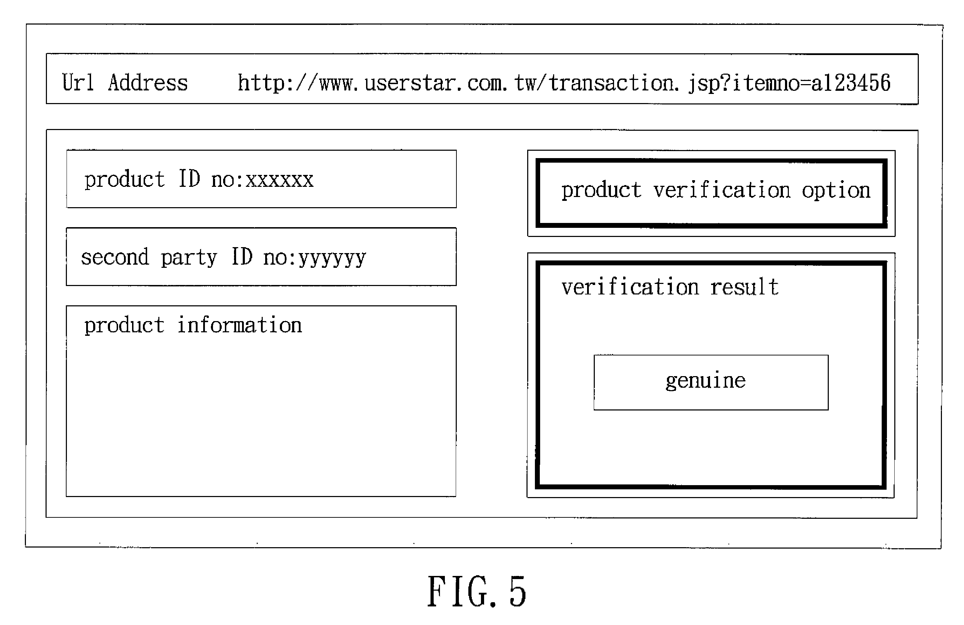

As illustrated in Figure 5, the webpage provided by the marketplace server 1 in this step is browsable by the first party through the Internet using the first user terminal 3, and contains an ID number of the product, an ID number of the second party, the information relevant to the product, and the verification result.

Alternatively, in the online trading method of this invention, the authenticity of the product may be verified in accordance with the method disclosed in U.S. Patent Application Publication No. 2008/0079535. In particular, in step 25, the code request sent to the transponder 6 includes a varying key, e.g., a time-dependent key. In step 26, the UID code included in the response signal is one encrypted using the varying key. In step 30, the authentication center 2 receives the UID code of the transponder 6 and the varying code, and the verification result generated thereby is based on the UID code of the transponder 6 and the varying key received thereby.

From the above description, since the online trading system/method of this invention has a mechanism that permits verification of the authenticity of a product being offered for trade on the marketplace server 1, the probability of purchasing a counterfeit product by the first party is lowered. Moreover, since the mechanism of the online trading system/method of this invention permits the verification of the authenticity of the product tobe initiated by the first party, the confidence of the first party as to the verification result can be increased.

## Claims

1. An online trading method, **characterized by**:
configuring a marketplace server (1) to receive a product verification request from a first user terminal (3) of a first party to verify authenticity of a product being offered for trade by a second party, and to send an authentication request to a second user terminal (4) of the second party in response to the product verification request;
configuring the second user terminal (4) to receive the authentication request from the marketplace server (1) and to send a code request to a transponder (6) that is associated with the product, wherein the second user terminal (4) is equipped with a reader (5) for sending the code request wirelessly to the transponder (6);
configuring the transponder (6) to receive the code request from the reader (5) and to send a response signal wirelessly to the reader (5), the response signal including a unique identification (UID) code of the transponder (6);
configuring the second user terminal (4) to receive the response signal from the transponder (6) via the reader (5); and
configuring an authentication center (2) to receive the UID code of the transponder (6) from the second user terminal (4) or from the second user terminal (4) via the marketplace server (1), to generate a verification
result based on the UID code received thereby, and to send the verification result to one of the first user terminal (3) and the marketplace server (1) for notifying the first party of the verification result.

2. The online trading method as claimed in claim 1, further **characterized by**:
configuring the marketplace server (1) to receive a product registration request including information relevant to the product from the second user terminal (4), and to provide a webpage for the product based on the information relevant to the product.

3. The online trading method as claimed in claim 2, **characterized in that** the webpage provided by the marketplace server (1) is browsable by the first party through the Internet using the first user terminal (3), and contains a product verification option that is available for selection by the first party using the first user terminal (3) so as to generate the product verification request to be received by the marketplace server (1).

4. The online trading method as claimed in claim 1, **characterized in that** the second user terminal (4) is configured to send the UID code of the transponder (6) to the marketplace server (1), the marketplace server (1) is configured to receive the UID code of the transponder (6) from the second user terminal (4) and to send the UID code of the transponder (6) to the authentication center (2), and the authentication center (2) is configured to receive the UID code of the transponder (6) from the marketplace server (1).

5. The online trading method as claimed in claim 1, **characterized in that** the authentication center (2) is configured to send the verification result to the marketplace server (1), and the marketplace server (1) is configured to receive the verification result from the authentication center (2) and to send the verification result to the first user terminal (3).

6. The online trading method as claimed in claim 1, **characterized in that** the code request includes a varying key, and the UID code included in the response signal is one encrypted using the varying key.

7. The online trading method as claimed in claim 6, **characterized in that** the response signal further includes the varying key, and the authentication center (2) is configured to receive the UID code and the varying key and to generate the verification result based on the UID code and the varying key received thereby.

8. The online trading method as claimed in claim 6, **characterized in that** the varying key is a time-dependent key.

9. An online trading system, **characterized by**:
a marketplace server (1) configured to receive a product verification request from a first user terminal (3) of a first party to verify authenticity of a product being offered for trade by a second party, and to send an authentication request in response to the product verification request;
a transponder (6) associated with the product and having a unique identification (UID) code;
a second user terminal (4) configured to receive the authentication request from said marketplace server (1) and to send a code request to said transponder (6), said second user terminal (4) being equipped with a reader (5) for sending the code request wirelessly to said transponder (6);
said transponder (6) being configured to receive the code request from said reader (5) and to send a response signal wirelessly to said reader (5), the response signal including the UID code;
said second user terminal (4) being configured to receive the response signal from said transponder (6) via said reader (5); and
an authentication center (2) configured to receive the UID code of said transponder (6) from said second user terminal (4) or from said second user terminal (4) via said marketplace server (1), to generate a verification result based on the UID code received thereby, and to send the verification result to one of the first user terminal (3) and said marketplace server (1) for notifying the first party of the verification result.

10. The online trading system as claimed in claim 9, **characterized in that** said marketplace server (1) is further configured to receive a product registration request including information relevant to the product from said second user terminal (4), and to provide a webpage for the product based on the information relevant to the product.

11. The online trading system as claimed in claim 10, **characterized in that** the webpage provided by said marketplace server (1) is browsable by the first party through the Internet using the first user terminal (3), and contains a product verification option that is available for selection by the first party using the first user terminal (3) so as to generate the product verification request received by said marketplace server (1).

12. The online trading system as claimed in claim 9, **characterized in that** said second user terminal (4) is configured to send the UID code of said transponder (6) to said marketplace server (1), said marketplace server (1) is configured to receive the UID code of said transponder (6) from said second user terminal (4) and to send the UID code of said transponder (6) to said authentication center (2), and said authentication center (2) is configured to receive the UID code of said transponder (6) from said marketplace server (1).

13. The online trading system as claimed in claim 9, **characterized in that** said authentication center (2) is configured to send the verification result to said marketplace server (1), and said marketplace server (1) is configured to receive the verification result from said authentication center (2) and to send the verification result to the first user terminal (3).

14. The online trading system as claimed in claim 9, **characterized in that** the code request includes a varying key, and the UID code included in the response signal is one encrypted using the varying key.

15. The online trading system as claimed in claim 14, **characterized in that** the response signal further includes the varying key, and said authentication center (2) is configured to receive the UID code and the varying key and to generate the verification result based on the UID code and the varying key received thereby.
